# EUROPÄISCHE PATENTANMELDUNG

(11) **EP 1 705 771 A2**
(43) Veröffentlichungstag der Anmeldung: **27.09.2006**
(21) Anmeldenummer: 05020647.3
(22) Anmeldetag: 22.09.2005
(51) Int. Cl.: H02G 15/04, H02G 3/06

(54) **Vorrichtung zur Durchführung einer Leitung**

(30) Priorität: 24.03.2005 DE 102005014390
(71) Anmelder: Murrplastik Systemtechnik GmbH, 71570 Oppenweiler (DE)
(72) Erfinder:
(74) Vertreter: Reule, Hanspeter

(57) **Zusammenfassung**

Die Erfindung betrifft eine Vorrichtung zur Durchführung einer Leitung, insbesondere eines Kabels (26), durch einen Durchbruch in einer Wand mit einem Grundkörper (12), der zwischen einer Eingangsöffnung (20) an seinem ersten Ende und einer Ausgangsöffnung (22) an seinem zweiten Ende einen Durchführkanal (24) für die Leitung (26) aufweist, an dem eine Fixiereinrichtung (18;60) zum Fixieren der aus der Ausgangsöffnung (22) austretenden Leitung (26) angebracht ist, und der Befestigungsmittel (34, 44) zum Befestigen am Wanddurchbruch aufweist. Erfindungsgemäß ist vorgesehen, dass die Befestigungsmittel ein sich vom ersten Ende erstreckendes Außengewinde (34) sowie mindestens eine sich in Längsrichtung des Grundkörpers (12) erstreckende Rastzunge (44) aufweisen, welche an einem freien Ende (50) einen Rasthaken (52) zum Hintergreifen der Wand am Wanddurchbruch aufweist.

## Beschreibung

Die Erfindung betrifft eine Vorrichtung zur Durchführung einer Leitung, insbesondere eines Kabels, durch einen Durchbruch in einer Wand gemäß Oberbegriff des Anspruchs 1 bzw. gemäß Oberbegriff des Anspruchs 10.

Bekannte Vorrichtungen der eingangs genannten Art dienen vorzugsweise zur Durchführung von Kabeln durch Durchbrüche in einer Schaltschrankwand. Sie weisen einen Grundkörper mit einem Durchführkanal für das Kabel auf, auf den eine Überwurfmutter aufgesetzt ist. Diese weist eine konische Innenwand auf, mit der sie beim Festschrauben auf ein elastisches Zwischenstück drückt, wodurch der Querschnitt des Durchführkanals verengt und das Kabel festgeklemmt wird. Dadurch wird zum einen eine Zugentlastung für das Kabel erreicht, zum anderen wird der Durchführkanal gegen Feuchtigkeit oder Staub abgedichtet. Zur Befestigung am Schaltschrank weist der Grundkörper entweder ein Außengewinde auf, das durch den Wanddurchbruch durchgeschoben wird und auf das eine Gegenmutter aufgeschraubt wird. Eine andere Möglichkeit der Befestigung besteht darin, dass der Grundkörper Rasthaken aufweist, die die Wand am Wanddurchbruch hintergreifen. Die erste Art der Befestigung erfordert ein Eingreifen in den Schaltschrank beim Anbringen der Vorrichtung. Außerdem ist mit der Gegenmutter ein zusätzliches Bauteil erforderlich. Die zweite Befestigungsmöglichkeit ermöglicht zwar eine wesentlich einfachere Montage, hat aber den Nachteil, dass die Rasthaken nur für eine bestimmte Wandstärke ausgelegt sind. Bei unterschiedlichen Anwendungsfällen kann somit entweder die eine oder die andere Befestigungsmöglichkeit vorteilhaft sein. Aus diesem Grund müssen die bekannten Vorrichtungen stets in beiden Ausführungsformen hergestellt und bevorratet werden, was aufwendig und teuer ist. Desweiteren müssen die bekannten Vorrichtungen aus mehreren Einzelteilen zusammengesetzt werden, was ihre Herstellung ebenfalls verteuert.

Es ist daher Aufgabe der Erfindung, eine Vorrichtung der eingangs genannten Art derart weiterzubilden, dass sie kostengünstiger anwendbar ist.

Die Aufgabe wird erfindungsgemäß durch eine Vorrichtung mit den Merkmalen des Patentanspruchs 1 bzw. mit den Merkmalen des Patentanspruchs 10 gelöst. Vorteilhafte Weiterbildungen der Erfindung sind Gegenstand der abhängigen Ansprüche.

Der Erfindung liegt der Gedanke zugrunde, beide Befestigungsmöglichkeiten bei einer Vorrichtung zu kombinieren. Die Vorrichtung kann dann wahlweise durch Einrasten am Rand des Wanddurchbruchs oder durch Festschrauben mittels einer Gegenmutter an der Wand befestigt werden. Die erste Befestigungsmöglichkeit ist einfach zu handhaben, aber weniger stabil und erfordert eine genaue Anpassung der Rastzunge an die Wandstärke. Die zweite Befestigungsmöglichkeit ist zwar schwieriger zu handhaben, ist aber belastbarer und bei unterschiedlichen Wandstärken anwendbar.

Zweckmäßig weisen die Befestigungsmittel mindestens zwei Rastzungen auf. Diese sind vorzugsweise symmetrisch bezüglich einer Mittelachse des Grundkörpers angeordnet. Je mehr Rastzungen die Befestigungsmittel aufweisen, desto stabiler ist die Rastverbindung. Zweckmäßig weist der Grundkörper ein sich von seinem ersten Ende erstreckendes Einführungsteil zum Einführen in den Wanddurchbruch auf, das das Außengewinde trägt. Desweiteren weist er zweckmäßig ein sich von seinem zweiten Ende erstreckendes Fixierteil zum Fixieren der Leitung auf, an dem die Fixiereinrichtung angebracht ist. Beide Teile können einstückig miteinander verbunden sein, insbesondere wenn der Grundkörper als Spritzgussteil gefertigt ist. Die mindestens eine Rastzunge ist zweckmäßig am Grundkörper befestigt, vorzugsweise angeformt, und erstreckt sich in eine mit dem Durchführkanal kommunizierende Durchbrechung im Grundkörper. Beim Einführen des Einführungsteils in den Wanddurchbruch wird die Rastzunge in den Durchführkanal gebogen und schnellt in ihre Ausgangslage zurück, wenn der Rasthaken den Rand der Wanddurchbrechung hintergreift.

Das Fixierteil weist zweckmäßig einen umlaufenden, gegenüber dem Einführungsteil hervorspringenden Absatz zur Anlage an der Wand auf. Der Absatz bildet einen Anschlag, bis zu dem der Grundkörper mit seinem Einführungsteil in den Wanddurchbruch eingeführt werden kann. In den Durchbrechungen befindet sich zweckmäßig zwischen dem Grundkörper und der mindestens einen Rastzunge ein Spalt. Dieser ist an einer Übergangsstelle zwischen dem Fixierteil und dem Einführungsteil, in der der Absatz vorspringt, verengt, so dass eine bessere Abdichtung des Wanddurchbruchs erreicht wird.

Der Lösung der erfindungsgemäßen Aufgabe gemäß Anspruch 10 liegt der Gedanke zugrunde, dass der am Grundkörper befestigte Schrumpfschlauch durch Temperaturbeaufschlagung an einen Abschnitt der aus der Ausgangsöffnung austretenden Leitung eng angelegt werden kann. Dadurch wird die Ausgangsöffnung gegen Staub oder Feuchtigkeit der Umgebung abgedichtet, und es wird gleichzeitig eine Zugentlastung für das Kabel geschaffen. Der Schrumpfschlauch ist ein flexibler Kunststoffschlauch, dessen lichte Weite sich beim Erhitzen verengt. Insbesondere besteht er im Wesentlichen aus einem Kunststoff wie Polyethylen, der beispielsweise durch Strahlenvernetzung ein Erinnerungsvermögen aufweist und gedehnt ist und sich bei Erhitzen wieder zusammenzieht. Als Leitung kommen insbesondere, wie auch bei der erfindungsgemäßen Lösung nach Anspruch 1, Kabel oder Schläuche in Betracht.

Zweckmäßig ist das zweite Ende des Grundkörpers im Schrumpfschlauch aufgenommen. Der Schrumpfschlauch umgreift damit das zweite Ende und die an ihm befindliche Ausgangsöffnung vollständig.

Vorzugsweise weist der Grundkörper ein Einführungsteil in den Wanddurchbruch sowie ein Fixierteil auf, an dem der Schrumpfschlauch angebracht ist, wobei das Fixierteil einen umlaufenden, gegenüber dem Einführungsteil hervorspringenden Absatz zur Anlage an der Wand aufweist und wobei der Schrumpfschlauch über den Absatz gezogen ist und an einer quer zum Einführungsteil angeordneten Kreisringfläche des Absatzes anliegt. Wenn der Absatz gegen die Wand gedrückt wird, wird durch den zwischen dem Absatz und der Wand und der Wand eingeklemmten Schrumpfschlauchabschnitt eine Abdichtung für den Wanddurchbruch erzielt.

Alternativ hierzu kann das Fixierteil einen umlaufenden Wulst aufweisen, über den der Schrumpfschlauch gezogen ist, wobei auf das mit dem Schrumpfschlauch versehene Fixierteil ein Klemmring zum Festklemmen des Schrumpfschlauchs aufgerastet ist, der den Wulst an dessen dem zweiten Ende des Grundkörpers abgewandter Seite hintergreift. Zweckmäßig weist der Grundkörper einen Anschlagring auf, an dem der aufgerastete Klemmring anliegt. Der Schrumpfschlauch wird zum Befestigen einfach über den Wulst gezogen und durch Aufrasten des Klemmrings am Grundkörper festgeklemmt. Hierzu wird der Klemmring vom zweiten Ende her auf das Fixierteil aufgeschoben, bis er den Wulst hintergreift. Alternativ oder ergänzend kann der Schrumpfschlauch durch Temperaturbeaufschlagung auf den Grundkörper aufgeschrumpft sein.

Das Einführungsteil kann ein Außengewinde aufweisen, wobei zum Befestigen der Vorrichtung an der Wand das Einführungsteil mit dem ersten Ende durch den Wanddurchbruch durchgeführt wird und eine Gegenmutter auf das Außengewinde aufgeschraubt wird, bis sie an der Wand zur Anlage kommt. Alternativ zum Außengewinde kann der Grundkörper sich in seiner Längsrichtung erstreckende Rastzungen aufweisen, die an ihren freien Enden Rasthaken zum Hintergreifen der Wand am Wanddurchbruch aufweisen. Besonders vorteilhaft ist eine Kombination beider Befestigungsmittel.

Zweckmäßig weist der Grundkörper eine umlaufende Anlagefläche zur Anlage an der Wand auf, wobei an die Anlagefläche ein Dichtring anlegbar ist.

Im Folgenden wird die Erfindung anhand der in der Zeichnung schematisch dargestellten Ausführungsbeispiele näher erläutert. Es zeigen
- Fig. 1: eine perspektivische Darstellung einer Durchführungsvorrichtung für ein Kabel gemäß einem ersten Ausführungsbeispiel;
- Fig. 2: die Vorrichtung gemäß Fig. 1, in Längsrichtung aufgeschnitten;
- Fig. 3: eine schematische Darstellung einer Durchführungsvorrichtung gemäß einem zweiten Ausführungsbeispiel ohne Schrumpfschlauch und
- Fig. 4: einen Schnitt entlang der Linie A-A der Fig. 3 mit auf dem Grundkörper befestigtem Schrumpfschlauch;
- Fig. 5: eine schematische Darstellung einer Durchführungsvorrichtung gemäß einem dritten Ausführungsbeispiel im Längsschnitt.

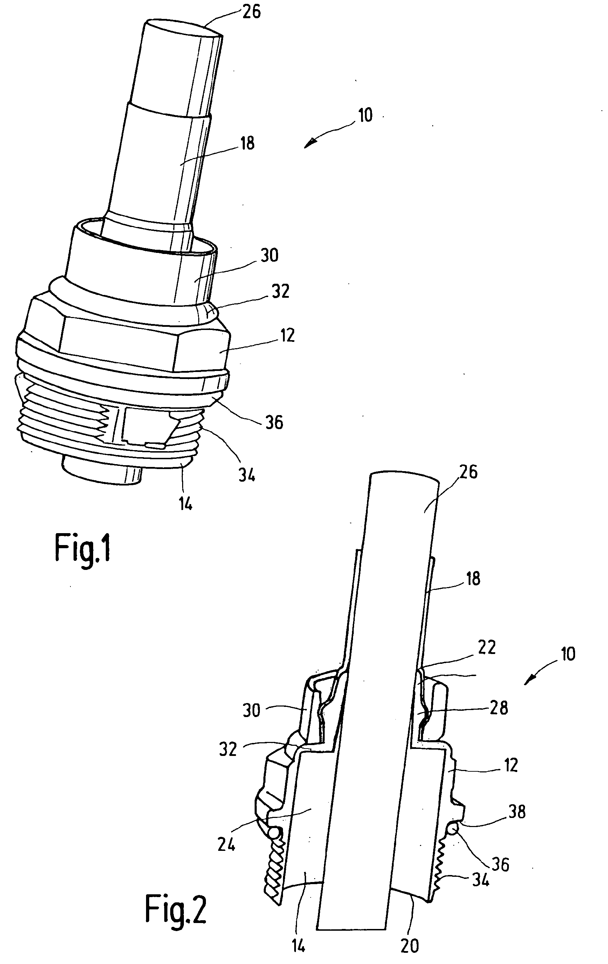

Die Durchführungsvorrichtung 10 gemäß dem ersten Ausführungsbeispiel (Figuren 1 und 2) weist einen Grundkörper 12 auf, der als Spritzgussteil aus Kunststoff einstückig gefertigt ist. Der Grundkörper 12 weist einen ersten Abschnitt auf, der als Einführungsteil 14 zum Einführen in einen Durchbruch in einer Schaltschrankwand dient, sowie einen zweiten Abschnitt, der als Fixierteil 16 zum Befestigen eines Schrumpfschlauchs 18 und zum Fixieren eines durch den Wanddurchbruch durchgeführten Kabels 26 dient. Von einer Eingangsöffnung 20 am Ende des Einführungsteils 14 bis zu einer Ausgangsöffnung 22 am Ende des Fixierteils 16 erstreckt sich ein Durchführungskanal 24 für das Kabel 26. Der Schrumpfschlauch 18 ist über einen Wulst 28 gezogen, der rings um das Fixierteil 16 umläuft. Über das Fixierteil 16 ist ein Klemmring 30 geschoben, dessen Innendurchmesser an einer Öffnung geringer ist als der Außendurchmesser des Fixierteils 16 im Bereich des Wulstes 28. Der Klemmring 30 wird zum Befestigen des Schrumpfschlauchs 18 über den Wulst 28 geschoben, wobei er elastisch aufgeweitet wird, bis er an einem Anschlagring 32 anliegt und den Wulst 28 hintergreift. Dadurch wird der Schrumpfschlauch 18 festgeklemmt.

Zur Befestigung an der Schaltschrankwand weist der Grundkörper 12 am Einführungsteil 14 ein Außengewinde 34 auf. Das Einführungsteil 14 wird durch den Wanddurchbruch durchgeführt, bis ein an einer Anlagefläche 38 anliegender Dichtring 36 gegen die Wand gepresst wird. Anschließend wird eine Überwurfmutter auf das Außengewinde 34 aufgeschraubt und die Durchführungsvorrichtung 10 damit an der Wand fixiert. Durch den Durchführkanal 24 und den Schrumpfschlauch 18 wird das Kabel 26 durchgeführt. Zur Abdichtung der Ausgangsöffnung 22 und zur Fixierung und Zugentlastung des Kabels 26 wird der Schrumpfschlauch mit Hitze beaufschlagt und legt sich eng an den aus der Ausgangsöffnung 22 austretenden Abschnitt des Kabels 26 an. Auch in seinem Endabschnitt, an dem er über das Fixierteil 16 gezogen ist, kann der Schrumpfschlauch erhitzt werden, so dass er sich auch eng an das Fixierteil 16 anlegt.

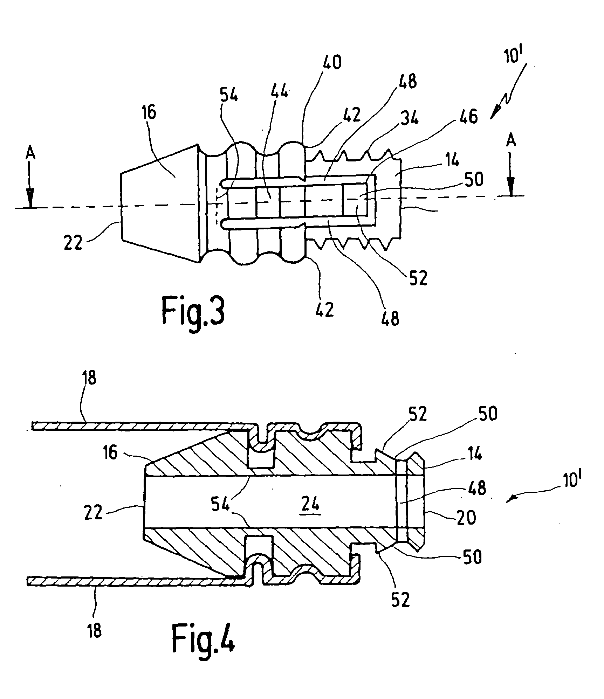

Die Durchführungsvorrichtung 10' gemäß dem zweiten Ausführungsbeispiel (Figuren 3 und 4) entspricht in ihren wesentlichen Bestandteilen der Durchführungsvorrichtung 10 gemäß dem ersten Ausführungsbeispiel. Gleichwirkende Merkmale sind daher mit denselben Bezugszeichen versehen. Das Fixierteil 16 weist gemäß dem zweiten Ausführungsbeispiel jedoch keinen Wulst auf, sondern einen gegenüber dem Einführungsteil 14 hervortretenden, ringsumlaufenden Absatz 40. Der Schrumpfschlauch 18 wird mit einem Ende über den Absatz 40 gezogen und durch Hitzeeinwirkung auf das Fixierteil 16 aufgeschrumpft. Das Ende des Schrumpfschlauchs 18 liegt damit an einer quer zum Einführungsteil 14 verlaufenden, im Wesentlichen kreisringförmigen Fläche 42 an. Diese Fläche bzw. der auf sie aufgeschrumpfte Abschnitt des Schrumpfschlauchs 18 kommt zur Anlage an der Wand, wenn die Durchführungsvorrichtung 10' in den Wanddurchbruch eingesetzt wird. Das Ende des Schrumpfschlauchs 18 dient somit auch der Abdichtung des Wanddurchbruchs.

Zusätzlich zum Außengewinde 34 am Einführungsteil 14 weist die Durchführungsvorrichtung 10' zwei Rastzungen 44 auf. Diese sind am Fixierteil 16 einstückig angeformt und erstrecken sich in Durchbrechungen 46 im Grundkörper 12. Die Durchbrechungen 46 erstrecken sich vom Fixierteil 16 bis in den Einführungsteil 14. Zwischen den Rastzungen 44 und dem Fixierteil 16 bzw. dem Einführungsteil 14 befindet sich ein Spalt 48, der an der Stelle, an der der Absatz 40 hervortritt, verengt ist, um eine bessere Abdichtung des Wanddurchbruchs zu erreichen. An ihren freien Enden 50 tragen die Rastzungen 44 jeweils einen Rasthaken 52. Zum Befestigen wird die Durchführungsvorrichtung 10' mit ihrem Einführungsteil 14 in den Wanddurchbruch geschoben, wobei die Rastzungen 44 um eine Biegeachse 54 gegen eine elastische Rückstellkraft in den Durchführkanal 24 hineingebogen werden. Wenn das Einführungsteil 14 vollständig in den Wanddurchbruch eingeführt ist und der Absatz 40 an der Wand anliegt, bewegen sich die Rastzungen 44 durch die elastische Rückstellkraft wieder in ihre ursprüngliche Position, in der die Rasthaken 52 die Wand hintergreifen und die Durchführungsvorrichtung 10' an der Wand fixieren.

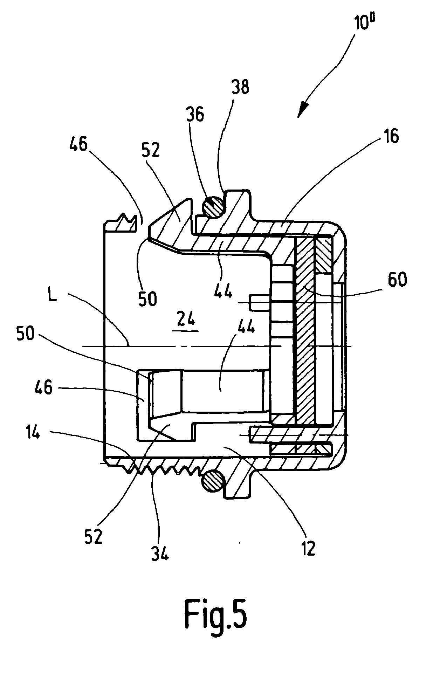

Die Durchführungsvorrichtung 10" gemäß dem dritten Ausführungsbeispiel (Fig. 5) weist statt des Schrumpfschlauchs als Fixiereinrichtung eine den Durchführkanal 24 durchspannende flexible Scheibe 60 aus Gummi auf. Diese ist am Grundkörper 12 befestigt, der wiederum ein Einführungsteil 14 und ein Fixierteil 16 aufweist. Gleichwirkende Merkmale sind auch hier mit denselben Bezugszeichen versehen wie in den ersten beiden Ausführungsbeispielen. Die Scheibe 60 weist eine Perforation auf, so dass ein Kabel durch die Scheibe durchgeschoben werden kann, wobei diese sich elastisch verformt und sich zum Abdichten des Wanddurchbruchs eng an die Außenfläche des Kabels anlegt. Am Fixierteil 16 ist eine umlaufende Anlagefläche 38 angeformt, an die ein Dichtring 36 angelegt ist. Bei der Montage der Durchführungsvorrichtung 10" an der Wand wird der Dichtring 36 durch die Anlagefläche 38 gegen den Rand des Wanddurchbruchs gepresst und dichtet somit den Wanddurchbruch ab. Das Einführungsteil weist ein sich vom ersten Ende des Grundkörpers 12 erstreckendes Außengewinde 34 auf. Desweiteren weist das Einführungsteil drei Durchbrechungen 46 auf, die mit dem Durchführkanal 24 kommunizieren. Die drei Durchbrechungen 46 sind symmetrisch bezüglich einer Längsmittelachse L des Durchführkanals 24 in gleichen Abständen zueinander angeordnet. In die Durchbrechungen 46 erstrecken sich Rastzungen 44, die am einen Ende am Grundkörper 12 befestigt sind und an ihrem freien Ende 50 jeweils einen Rasthaken 52 tragen. Die Befestigung der Durchführungsvorrichtung 10" an der Gehäusewand kann nun auf zwei Arten erfolgen. Zum einen ist es möglich, das Einführungsteil 14 so weit in den Wanddurchbruch einzuführen, bis die Rasthaken 52 die Wand hintergreifen. Dabei muß die Wanddicke so auf die Geometrie der Durchführungsvorrichtung 10" abgestimmt sein, dass zum einen der Dichtring 36 an der Außenseite der Wand anliegt, zum anderen die Rasthaken 52 die Wand an ihrer Innenseite hintergreifen. Alternativ hierzu kann auf das Außengewinde 34 eine Gegenmutter aufgeschraubt werden, bis die Gegenmutter an der Innenseite der Wand anliegt und der Dichtring 36 an die Außenseite der Wand gepresst wird. Im letzteren Fall sind die Rastzungen 44 an ihren freien Enden 50 in den Durchführkanal 24 gebogen, wenn die Wand zu dick ist, um von den Rasthaken 52 hintergriffen zu werden. Desweiten bewirkt die in Einführungsrichtung abgeschrägte Form der Rasthaken 52, dass die Rastzungen 44 beim Aufschrauben der Gegenmutter in den Durchführkanal 24 gedrückt werden.

Zusammenfassend ist folgendes festzuhalten: Die Erfindung betrifft eine Vorrichtung zur Durchführung einer Leitung, insbesondere eines Kabels 26, durch einen Durchbruch in einer Wand mit einem Grundkörper 12, der zwischen einer Eingangsöffnung 20 an seinem ersten Ende und einer Ausgangsöffnung 22 an seinem zweiten Ende einen Durchführkanal 24 für die Leitung 26 aufweist, an dem eine Fixiereinrichtung 18 zum Fixieren der aus der Ausgangsöffnung 22 austretenden Leitung 26 angebracht ist, und der Befestigungsmittel 34, 44 zum Befestigen am Wanddurchbruch aufweist. Erfindungsgemäß ist vorgesehen, dass die Befestigungsmittel ein sich vom ersten Ende erstreckendes Außengewinde 34 sowie mindestens eine sich in Längsrichtung des Grundkörpers 12 erstreckende Rastzunge 44 aufweisen, welche an einem freien Ende 50 einen Rasthaken 52 zum Hintergreifen der Wand am Wanddurchbruch aufweist.

## Patentansprüche

1. Vorrichtung zur Durchführung einer Leitung, insbesondere eines Kabels (26), durch einen Durchbruch in einer Wand mit einem Grundkörper (12), der zwischen einer Eingangsöffnung (20) an seinem ersten Ende und einer Ausgangsöffnung (22) an seinem zweiten Ende einen Durchführkanal (24) für die Leitung (26) aufweist, an dem eine Fixiereinrichtung (18; 60) zum Fixieren der aus der Ausgangsöffnung (22) austretenden Leitung (26) angebracht ist, und der Befestigungsmittel (34, 44) zum Befestigen am Wanddurchbruch aufweist, **dadurch gekennzeichnet, dass** die Befestigungsmittel ein sich vom ersten Ende erstreckendes Außengewinde (34) sowie mindestens eine sich in Längsrichtung des Grundkörpers (12) erstreckende Rastzunge (44) aufweisen, welche an einem freien Ende (50) einen Rasthaken (52) zum Hintergreifen der Wand am Wanddurchbruch aufweist.

2. Vorrichtung nach Anspruch 1, **dadurch gekennzeichnet, dass** die Befestigungsmittel mindestens zwei Rastzungen (44) aufweisen, die vorzugsweise symmetrisch bezüglich einer Mittelachse (L) des Grundkörpers (12) angeordnet sind.

3. Vorrichtung nach Anspruch 1 oder 2, **dadurch gekennzeichnet, dass** der Grundkörper (12) ein sich von seinem ersten Ende erstreckendes Einführungsteil (14) zum Einführen in den Wanddurchbruch aufweist, das das Außengewinde (34) trägt.

4. Vorrichtung nach einem der vorangehenden Ansprüche, **dadurch gekennzeichnet, dass** der Grundkörper (12) ein sich von seinem zweiten Ende erstreckendes Fixierteil (16) zum Fixieren der Leitung (26) aufweist, an dem die Fixiereinrichtung (18;60) angebracht ist.

5. Vorrichtung nach Anspruch 4, **dadurch gekennzeichnet, dass** das Fixierteil (16) einstückig mit dem Einführungsteil (14) verbunden ist.

6. Vorrichtung nach einem der vorangehenden Ansprüche, **dadurch gekennzeichnet, dass** die mindestens eine Rastzunge (44) am Grundkörper (12) befestigt, vorzugsweise angeformt, ist und sich in eine mit dem Durchführkanal (24) kommunizierende Durchbrechung (46) im Grundkörper (12) erstreckt.

7. Vorrichtung einem der Ansprüche 4 bis 6, **dadurch gekennzeichnet, dass** das Fixierteil (16) einen umlaufenden, gegenüber dem Einführungsteil (14) hervorspringenden Absatz (40) zur Anlage an der Wand aufweist.

8. Vorrichtung nach Anspruch 7, **dadurch gekennzeichnet, dass** sich in den Durchbrechungen (46) zwischen dem Grundkörper (12) und- der mindestens einen Rastzunge (44) ein Spalt (48) befindet, und dass der Spalt (48) an einer Übergangsstelle zwischen dem Fixierteil (16) und dem Einführungsteil (14), an der der Absatz (40) vorspringt, verengt ist.

9. Vorrichtung nach einem der vorangehenden Ansprüche, **dadurch gekennzeichnet, dass** die Fixiereinrichtung einen am Grundkörper (12) befestigten Schrumpfschlauch (18) zur Aufnahme eines aus der Ausgangsöffnung (22) tretenden Leitungsabschnitts und zum Abdichten der Ausgangsöffnung (22) aufweist.

10. Vorrichtung zur Durchführung einer Leitung, insbesondere eines Kabels (26), durch einen Durchbruch in einer Wand mit einem Grundkörper (12), der zwischen einer Eingangsöffnung (20) an seinem ersten Ende und einer Ausgangsöffnung (22) an seinem zweiten Ende einen Durchführkanal (24) für das Kabel (26) aufweist, und der Befestigungsmittel (34, 44) zum Befestigen am Wanddurchbruch aufweist, **gekennzeichnet durch** einen am Grundkörper (12) befestigten Schrumpfschlauch (18) zur Aufnahme eines aus der Ausgangsöffnung (22) tretenden Kabelabschnitts und zum Abdichten der Ausgangsöffnung (22).

11. Vorrichtung nach Anspruch 9 oder 10, **dadurch gekennzeichnet, dass** das zweite Ende des Grundkörpers (12) im Schrumpfschlauch (18) aufgenommen ist.

12. Vorrichtung nach einem der Ansprüche 9 bis 11, **dadurch gekennzeichnet, dass** der Grundkörper (12) ein Einführungsteil (14) zum Einführen in den Wanddurchbruch sowie ein Fixierteil (16) aufweist, an dem der Schrumpfschlauch (18) angebracht ist, wobei das Fixierteil (16) einen umlaufenden, gegenüber dem Einführungsteil (14) hervorspringenden Absatz (40) zur Anlage an der Wand aufweist, und wobei der Schrumpfschlauch (18) über den Absatz (40) gezogen ist und an einer quer zum Einführungsteil (14) angeordneten Kreisringfläche (42) des Absatzes (40) anliegt.

13. Vorrichtung nach einem der Ansprüche 9 bis 11, **dadurch gekennzeichnet, dass** der Grundkörper (12) ein Einführungsteil (14) zum Einführen in den Wanddurchbruch sowie ein Fixierteil (16) aufweist, das einen umlaufenden Wulst (28) aufweist, über den der Schrumpfschlauch (18) gezogen ist, und dass auf das mit dem Schrumpfschlauch (18) versehene Fixierteil (16) ein Klemmring (30) zum Festklemmen des Schrumpfschlauchs (18) aufgerastet ist, der den Wulst (28) an dessen dem zweiten Ende des Grundkörpers (12) abgewandter Seite hintergreift.

14. Vorrichtung nach Anspruch 13, **dadurch gekennzeichnet, dass** der Grundkörper (12) einen Anschlagring (32) aufweist, an dem der aufgerastete Klemmring (30) anliegt.

15. Vorrichtung nach einem der Ansprüche 9 bis 14, **dadurch gekennzeichnet, dass** der Schrumpfschlauch (18) durch Temperaturbeaufschlagung auf den Grundkörper (12) aufgeschrumpft ist.

16. Vorrichtung nach einem der Ansprüche 12 bis 15, **dadurch gekennzeichnet, dass** das Einführungsteil (14) ein Außengewinde (34) aufweist.

17. Vorrichtung nach einem der Ansprüche 12 bis 16, **dadurch gekennzeichnet, dass** der Grundkörper (12) sich in seiner Längsrichtung erstreckende Rastzungen (44) aufweist, die an ihren freien Enden (50) Rasthaken (52) zum Hintergreifen der Wand am Wanddurchbruch aufweisen.

18. Vorrichtung nach einem der vorangehenden Ansprüche, **dadurch gekennzeichnet, dass** der Grundkörper (12) eine umlaufende Anlagefläche (38) zur Anlage an der Wand aufweist, wobei an die Anlagefläche (38) ein Dichtring (36) anlegbar ist.
